# EUROPÄISCHE PATENTANMELDUNG

(11) **EP 2 014 355 A1**
(43) Veröffentlichungstag der Anmeldung: **14.01.2009**
(21) Anmeldenummer: 07020830.1
(22) Anmeldetag: 24.10.2007
(51) Int. Cl.: B01J 2/02, B01J 2/06

(54) **Vorrichtung und Verfahren zum Prillen**

(30) Priorität: 13.07.2007 DE 102007032778
(71) Anmelder: Linde AG, 80807 München (DE)
(72) Erfinder: Reinhardt, Hans-Jürgen, 87600 Kaufbeuren (DE); Himmen, Hans-Rudolf, 85778 Haimhausen (DE)
(74) Vertreter: Schüssler, Andrea

(57) **Zusammenfassung**

Die erfindungsgemäße Vorrichtung ist eine Vorrichtung zum Prillen von geschmolzenem Material. Die Vorrichtung weist einen Schmelzebehälter zum Schmelzen des Materials, einen Tropfenerzeugungsgenerator zum Ausbilden von Schmelzetropfen aus der Schmelze, ein Fallrohr und eine Kühleinrichtung auf. Der Tropfenerzeugungsgenerator ist am oberen Ende des Fallrohres angeordnet. Am unteren Ende des Fallrohrs ist ein mit einer cryogenen Flüssigkeit gefülltes Bad derart angeordnet, dass die vom Tropfenerzeugungsgenerator herabfallenden Schmelzetropfen in das Bad fallen. Eine Fördereinrichtung führt das Granulat aus dem Bad ab.

## Beschreibung

Die vorliegende Erfindung betrifft eine Vorrichtung und ein Verfahren zum Prillen.

Für die Aufarbeitung von Schmelzen wurden bereits verschiedene Verfahren wie beispielsweise Granulieren oder Zerstäuben entwickelt.

Aus der WO 99/33555 geht ein solches Prillverfahren und eine Vorrichtung zur Herstellung eines Granulats aus einer Schmelze chemischer Produkte hervor. Dabei tritt die Schmelze aus einer Kammer durch Öffnungen des Kammerbodens in eine Fallrohrkammer. Im oberen Bereich der Fallrohrkammer bilden sich feine Tröpfchen, die während des Falls in der Fallrohrkammer durch ein ebenfalls im oberen Bereich der Fallrohrkammer zugeführtes Medium abgekühlt werden. Das zugeführte Medium ist flüssiger Stickstoff der tröpfchenweise in die Fallrohrkammer eingeleitet wird und dort verdampft. Am Ende der Fallrohrkammer ist ein Wirbelschichtkühler vorgesehen, um das Granulat auf genau kontrollierte und geregelte Weise vollständig zu verfestigen.

Bei diesem Verfahren wird die äußerste Randschicht von Tropfen einer Stoffschmelze in einem kryogenen Gasstrom auf kürzestem Weg zum Erstarren gebracht bevor die Tropfen im Wirbelschichtkühler vollständig ausgehärtet werden. Ziel ist die Erzeugung eines gleichförmigen runden Produkts mit einer engen Partikelgrößenverteilung.

Dieses Prillverfahren wurde für organische Stoffe (z.B. Wachse) und große Durchsätze (500 bis 11000 kg/h) entwickelt.

Die erste Stufe beim Prillen, ist die Vorverfestigung. Sie findet stets in inerter Atmosphäre statt. Die zweite Stufe, die vollständige Durchhärtung, kann in einem Wirbelschichtkühler im offenen System mit Umgebungsluft (Single Pass), wie es in der WO 99/33555 beschrieben ist, oder inert in einem geschlossenen Kreislauf (Closed Loop) durchgeführt werden.

Beim Single Pass-Verfahren ist das vom Wirbelschichtkühler verwendete Prozessgas Umgebungsluft, die über einen Zyklon in die Atmosphäre gegeben wird. Eine weitere Gaskühlung ist dabei überflüssig.

Im Closed Loop-Verfahren besteht das im Wirbelschichtkühler verwendete Prozessgas aus Stickstoff, das über ein Einlassgebläse und einen Gaskühler wieder zugeführt wird. Der in der Anlage befindliche Stickstoff wird durch den in Prill-Erstarrungsrohren zugeführten Stickstoff wieder aufbereitet. Abgase oder Abluft werden dadurch reduziert.

Ein Vorteil des Closed Loop-Verfahrens ist die inerte Umgebung innerhalb des Wirbelschichtkühlers. Damit ist der gesamte Prozess von der Schmelzezufuhr bis zum Prillaustrag inert.

Anlagen die nach dem Closed Loop-Verfahren arbeiten werden von der Firma GMF Gouda und der Linde AG unter dem Handelsnamen Jet Priller vertrieben.

Nachteilig bei den bekannten Anlagen ist, dass die Anlagen auf einen großen Durchsatz ausgelegt sind und kleine Durchsätze von beispielsweise 5kg/h bis 50 kg/h nicht effektiv verprillt werden können.

Die Wirbelschichtkühlung ist sehr aufwendig und erfordert aufgrund ihres Aufbaus einen großen Platzbedarf. Eine Wirbelschichtkühlung mittels eines Zyklons ist nur für große Anlagen sinnvoll.

Zudem kommt es bei den bekannten Anlagen bei der Abgabe des Granulats häufig zur Agglomerisation, d.h. es kommt leicht zu Zusammenbackungen.

Der Verfestigungsprozess verläuft langsam.

Die Anlagen arbeiten mit einer vorgegebenen Tropfengröße, d.h. die Tropfengröße kann nicht bedarfsgerecht variiert werden.

Aufgabe der Erfindung ist es eine Vorrichtung und ein Verfahren zu schaffen, bei denen es möglich ist, die Anlage mit kleinem Durchsatz wirtschaftlich zu betreiben. Die Anlage soll einen geringen Platzbedarf haben. Der Verfestigungsprozess soll schnell ablaufen.

Die Aufgabe wird mit einer Vorrichtung mit den Merkmalen des Anspruchs 1 und einem Verfahren gemäß Anspruch 11 gelöst.

Vorteilhafte Ausgestaltungen sind in den jeweiligen Unteransprüchen angegeben.

Erfindungsgemäß ist eine Vorrichtung zum Prillen von geschmolzenem Material vorgesehen. Die Vorrichtung weist einen Schmelzebehälter zum Schmelzen des Materials, einen Tropfenerzeugungsgenerator zum Ausbilden von Tropfen aus dem geschmolzenen Material, ein Fallrohr und eine Kühleinrichtung auf. Der Tropfenerzeugungsgenerator ist am oberen Ende des Fallrohres angeordnet. Am unteren Ende des Fallrohrs ist ein mit einer cryogenen Flüssigkeit gefülltes Bad derart angeordnet, dass die vom Tropfenerzeugungsgenerator herabfallenden Tropfen in das Bad fallen. Eine Fördereinrichtung führt die erstarrten Tropfen aus dem Bad ab.

Die erfindungsgemäße Vorrichtung sieht vor, das Prozessmedium in einem mit flüssigen cryogenen Medium gefüllten Bad aufzufangen und abzukühlen. Auf diese Weise erfolgt die Verfestigung des Prozessmediums sehr schnell. Sauerstoff und Feuchtigkeit werden vom Prozessmedium ferngehalten. Der gesamte Prozess von der Schmelze bis zum Granulat läuft völlig inert ab.

Durch die Verwendung des cryogenen Mediumbads kann die Anlage auch für kleinere Produktionsmengen ausgelegt werden, beispielsweise 5 kg/h bis 50 kg/h, da mit dem erfindungsgemäßen cryogenem Mediumbad auch kleine Anlagen wirtschaftlich betrieben werden können. Die Einstellung des Durchsatzes kann somit ohne Qualitätsverluste bei minimalem technischem Aufwand erfolgen.

Aufgrund des kleinen Bauraums des cryogenem Mediumbades hat die Vorrichtung nur einen geringen Platzbedarf gegenüber den aus dem Stand der Technik bekannten Anlagen.

Als Fördereinrichtung ist vorzugsweise eine Transportschnecke vorgesehen. Dadurch kann das Prozessmedium inert und ohne Agglomerisation abgeführt werden. Die Transportschnecke kann in einem Temperaturbereich von 20°C bis -200°C arbeiten.

Erfindungsgemäß sind variable Lochplatten bzw. variable Düseneinsätze am Tropfenerzeugungsgenerator vorgesehen, um verschieden große kugelförmige Teilchen im mittleren Durchmesserbereich zwischen 0,5 mm und 2,5 mm bei engem Tropfenspektrum herstellen zu können.

Die Erfindung wird beispielhaft anhand der Zeichnungen erläutert. Es zeigen dabei schematisch in:
- Figur 1: eine Seitenansicht der erfindungsgemäßen Vorrichtung, und
- Figur 2: die in Figur 1 gezeigte Vorrichtung in einer geschnittenen Seitenansicht.

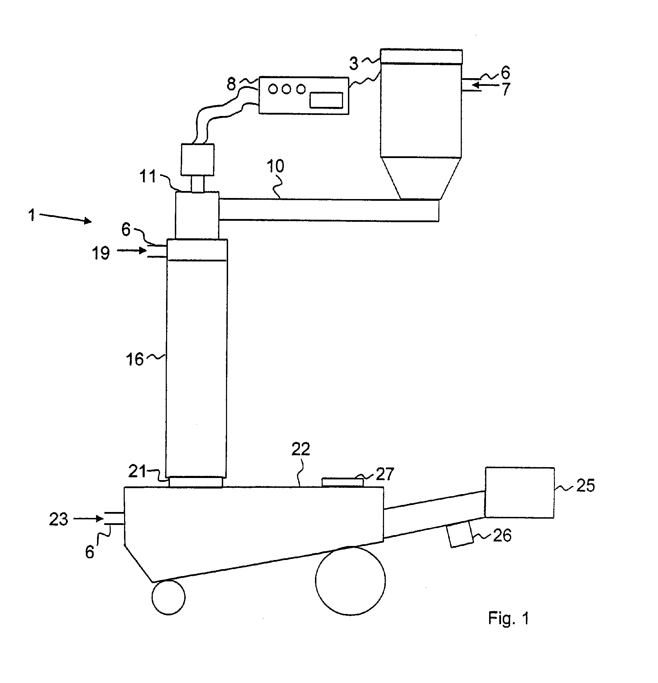

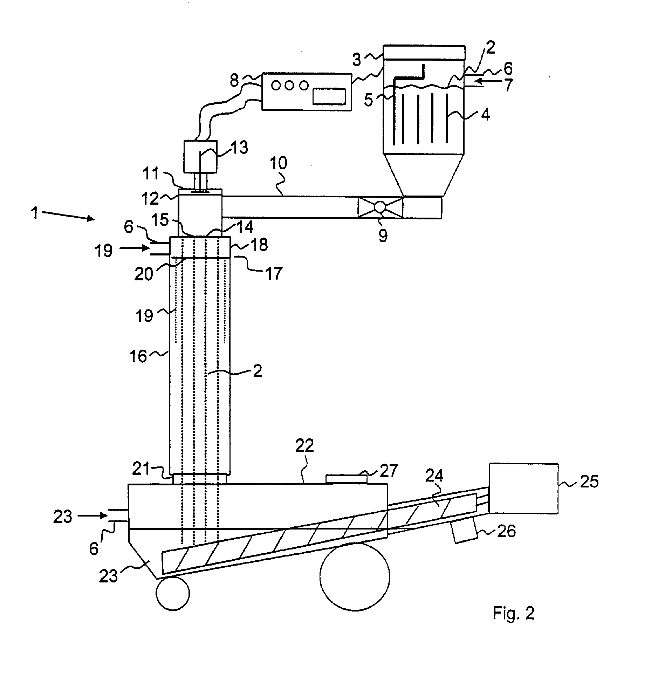

Die erfindungsgemäße Vorrichtung 1 (Fig. 1, Fig. 2) zum Prillen von Schmelzen 2 weist einen zylindrischen Schmelzebehälter 3 mit einem Volumen von in etwa 35 I auf, in dem das zu verprillende Prozessmedium 2 eingebracht und geschmolzen wird. Der Schmelzebehälter 3 weist eine Heizvorrichtung 4, ein Rührwerk 5 und eine Medienzuführung 6 auf, die jeweils mit einer Steuervorrichtung 8 verbunden sind. Die Medienzuführung 6 dient zum Zuführen eines inerten Mediums 7, wie z.B. Stickstoff, um den Sauerstoff aus dem Schmelzebehälter 3 zu verdrängen. Nach oben hin ist der Schmelzebehälter mit einem zu öffnenden Deckel versehen. Der untere Teil des Schmelzebehälters ist trichterförmig ausgebildet an dessen unterem Ende der Ausgang des Schmelzebehälters 3 angeordnet ist.

Über ein Ventil 9 ist der Ausgang des Schmelzebehälters 3 mit einer Transferleitung 10 verbunden, die beheizbar ausgebildet ist. Das Ventil wird erst geöffnet, wenn die Schmelze ihren Verarbeitungszustand erreicht hat. Die Transferleitung 10 mündet in einen beheizbaren Tropfenerzeugungsgenerator 11, um aus der Schmelze Tropfen zu erzeugen.

Der Tropfenerzeugungsgenerator 11 ist ebenfalls als zylindrischer Körper ausgebildet, dessen Innenraum eine Kammer bildet. In der Kammer ist eine Federplatte 12, eine Schwingungseinheit 13 und eine Lochplatte 14 angeordnet. Die Lochplatte 14 weist variable Öffnungen 15 bzw. variable Düsen 15 auf, die in einem kreisförmigen Muster angeordnet sind. Die Achsen der Öffnungen 15 bzw. der Düsen 15 verlaufen senkrecht zueinander. Die Anzahl der Öffnungen 15 bzw. Düsen 15 beträgt z.B. drei bis zehn. Der Düsendurchmesser beträgt vorzugsweise zwischen 0,3 mm bis 0,7 mm und bestimmt die Größe der durch die Düsenöffnungen austretenden Schmelzetropfen 2 bzw. des daraus gebildeten Granulats 2. Die Federplatte 12 wird über die Schwingungseinheit 13 in eine Schwingung mit senkrechter Amplitude versetzt. Die Federplatte 12 überträgt diese Schwingung auf die unterhalb der Federplatte angeordnete Schmelze 2. Über die Schwingungsfrequenz bzw. die Amplitude der Schwingungseinheit 13 kann ebenfalls der Tropfendurchmesser variiert werden.

Unterhalb des Tropfenerzeugungsgenerators 11 ist ein vakuumisoliertes Fallrohr 16 mit kreisförmigen Querschnitt angeordnet.

Über Verbindungsmittel kann der Tropfenerzeugungsgenerator 11 mit dem Fallrohr 16 lösbar verbunden werden.

Das Fallrohr 16 weist am oberen Ende 17 einen ringförmigen Verteiler 18 zum Ausgeben eines cryogenen Mediums 19 auf. Der Verteiler 18 wird über eine Medienzuführung 6 mit einem cryogenen Medium 19, z.B. flüssigem Stickstoff gespeist. Das cryogene Medium 7 wird über mehrere konzentrisch auf der Unterseite des Verteilers 18 angeordnete Düsen 20 innerhalb des Fallrohrs 16 ausgegeben und verteilt. Die Düsen 20 des Verteilers 18 umschließen den Bereich in dem die Schmelze von den Düsen 15 der Lochplatte 14 in das Fallrohr 16 ausgegeben wird kreisförmig. Die Achsen der Düsen 20 des Verteilers sind zueinander und zu den Achsen der Öffnungen 15 bzw. Düsen 15 des Tropfenerzeugungsgenerators 11 parallel. Vorzugsweise weist der Verteiler 18 z.B. 24 Bohrungen mit einem Durchmesser von z.B. 0,3 mm auf.

Der Tropfenerzeugungsgenerator 11 entspricht im wesentlichen dem aus der WO 99/33555 bekannten Tropfenerzeugungsgenerator, wobei der Tropfenerzeugungsgenerator der WO 99/33555 im Bereich der Lochplatte flüssigen Stickstoff einleitet und bei der erfindungsgemäßen Vorrichtung das cryogene Medium über den Verteiler 18 eingeleitet wird.

Über ein Verbindungselement 21 ist das Fallrohr 16 mit einer Deckenwandung eines cryogenem Mediumbades 22 verbunden in dem die Tropfen des Prozessmediums 2 aufgefangen und abgekühlt bzw. durchgehärtet werden. Die Deckenwandung liegt lose auf dem Mediumbad 22 auf und dichtet es über ihr Eigengewicht ab. In der Deckenwandung ist ein Filter 27 vorgesehen, durch den cryogenes Medium nach außen entweichen kann. Hierdurch kann ein im Inneren entstehender Überdruck begrenzt werden. Der Filter 27 ist als Vlies ausgebildet. Das Verbindungselement 21 ist elastisch oder teleskopartig ausgebildet, um den Spalt zwischen dem Tropfenerzeugungsgenerator 11 und dem Fallrohr 16 beim Verbinden zu überbrücken und um die Längenänderungen des Fallrohrs 16 und des cryogenen Mediumbads 22 aufgrund der beim Betrieb der Vorrichtung auftretenden Temperaturänderungen auszugleichen. Das cryogene Mediumbad 22 ist in der Draufsicht als rechteckiger Behälter ausgebildet und wird über eine Medienzuführung 6 mit einem cryogenem Medium 23, vorzugsweise flüssigem Stickstoff, befüllt. Den Boden des Mediumbades 22 bilden eine kurze und eine lange Bodenwandung die etwa in einem 110° Winkel zueinander angeordnet sind. Die Medienzuführung 6 ist unterhalb des gewünschten Flüssigkeitspegels angeordnet. Das Volumen des cryogenen Mediumbades 22 beträgt z.B. 50 I und weist Mittel zum Regulieren der Füllstandshöhe auf. Die lange Bodenwandung des Mediumbades 22 ist vom Bereich in den das Fallrohr 16 mündet bis zum Ausgang hin ansteigend ausgebildet. Die lange Bodenwandung des Mediumbades 22 ist rinnenförmig ausgebildet. Die Wandungen des Mediumbades 22 sind isoliert, um den Wärmeübergangskoeffizienten vom Behälterinneren nach außen hin möglichst gering zu halten.

Der Austrag des Prozessmediums 2 bzw. des Granulats erfolgt über eine Fördereinrichtung 24 die als Austragsschnecke 24 ausgebildet ist. Die Austragschnecke 24 ist in der rinnenförmig ausgebildeten Bodenwandung angeordnet. Der Durchmesser der Austragsschnecke entspricht in etwa dem des Kreissegments der Bodenwandung. Die Austragsschnecke 24 wird von einem Elektromotor 25 angetrieben. Sie weist vorzugsweise eine Länge von etwa 1 m auf. Über ein Austragsventil 26 gelangt die verprillte Schmelze bzw. das Granulat in Transportbehälter. Das Austragsventil 26 ist immer dann geöffnet, wenn die Austragsschnecke 24 läuft. Die Ansteuerung des Austragsventils 26 kann auch über die anliegende Granulatmenge beispielsweise über einen Drucksensor erfolgen.
Nachfolgend wird die Anwendung der oben beschriebenen Prillvorrichtung erläutert.

Das zu verprillende Prozessmedium 2 wird in den Schmelzebehälter 3 eingebracht. Zur Vermeidung von Oxidationsreaktionen wird der Schmelzebehälter 3 über eine Medienzuführung 6 mit einem inerten Medium 7, beispielsweise Stickstoff, beaufschlagt. Anschließend wird das Prozessmedium 2 über die Heizvorrichtung 4 zunächst auf eine Temperatur oberhalb des Schmelzpunktes des Prozessmediums erwärmt.

Nachdem ein Großteil des Prozessmediums 2 geschmolzen ist wird die zur Tropfenerzeugung vorgesehene Temperatur eingestellt und die Schmelze 2 mittels des Rührwerks 5 zur Homogenisierung gerührt. Die eingestellte Temperatur liegt üblicherweise zwischen 5°C bis 20°C über dem Schmelzpukt des zu verprillenden Mediums.

Das Fallrohr 16 wird über die Düsen 20 des Verteilers 18 mit einem cryogenen Medium 19, z.B. flüssiger Stickstoff 19, beaufschlagt. Das cryogene Medium 19 fällt im Fallrohr 16 in sehr feinen Tropfen herab. Hierbei verdampfen die Tropfen möglichst vollständig bevor sie auf den Flüssigkeitsspiegel des Mediumbades 22 treffen würden und kühlen den Innenraum des Fallrohrs 16. Wird als cryogenes Medium flüssiger Stickstoff verwendet, dann kühlt dieser den Innenbereich des Fallrohrs 16 auf eine Temperatur von etwa -40°C bis -160°C ab. Die Temperatur ist abhängig von dem zu verprillenden Material und kann über die zugeführte Menge an cryogenem Medium 19, 23 gesteuert werden.

Das cryogene Mediumbad 22 wird über die Medienzuführung 6 ebenfalls mit einem cryogenen Medium 23 befüllt. In das Fallrohr 16 wird über die Düsen 20 des Verteilers 18 ebenfalls cryogenes Medium 19 eingeleitet. Das cryogene Medium 23 des Mediumbades 22 und das dem Fallrohr 16 zugeführte cryogene Medium 19 sind die gleichen. Vorzugsweise wird flüssiger Stickstoff 23 verwendet. Da zu Beginn des Befüllvorgangs die Wandung des Mediumbades und des Fallrohrs Raumtemperatur aufweisen, verdampft schnell ein beträchtlicher Teil des cryogenen Mediums 19, 23 und verdrängt die Luft im Fallrohr 16 und im Mediumbad 22. Die Luft wird vom verdampfenden Stickstoff verdünnt und durch den Filter 27 nach außen gespült. Nach einigen Minuten ist der ursprüngliche Luftanteil vollständig verdrängt und es herrscht eine reine Stickstoffatmosphäre. Das Austreiben der Luft und das Absenken der Temperatur bezeichnet man als Kaltfahren Der Vorgang des Kaltfahrens der Vorrichtung 1 dauert etwa 15 min bis 30 min.

Die Federplatte 12 des Tropfenerzeugungsgenerators 11 wird über die Schwingungseinheit 13 in eine Schwingung mit senkrechter Amplitude versetzt. Sobald die gewünschte Anregungsfrequenz erreicht ist gelangt die homogene Schmelze 2 aus dem Schmelzebehälter 3, nach dem Öffnen des Ventils 9, über die Transferleitung 10 in den Tropfenerzeugungsgenerator 11.

Die Schmelze 2 tritt in einzelnen parallel fallenden Schmelzetropfen 2, mit ähnlicher Größe und Masse, aus der Lochplatte 14 aus. Die Tropfen 2 fallen parallel zur Längsachse des Fallrohrs 16 in das Fallrohr 16. Weiterhin wird in das Fallrohr 16 über die Düsen 20 des Verteilers 18 das cryogene Medium 19, eingeleitet, das parallel zur Längsachse des Fallrohrs 16 ausströmt, um die Bahn der Schmelzetropfen 2 nicht zu beeinflussen. Würde die Bahn der Schmelzetropfen 2 beeinflusst, bestünde die Gefahr, dass zwei Schmelzetropfen 2 aneinander anhaften und der Durchmesserbereich des zu bildenden Granulats 2 unkontrolliert zunimmt.

Über einen Austausch der Düsen 15 bzw. der Lochplatte 14 lässt sich die Größe der Schmelzetropfen 2 und somit des erzeugten Granulats 2 beeinflussen. Die Größe der Schmelzetropfen 2 kann auch über die Anregungsfrequenz und die Amplitude der Lochplatte 14 variiert werden.

Durch das Abkühlen der Schmelzetropfen 2 des Prozessmediums 2 im Fallrohr bildet sich im Randbereich der Tropfen eine stabile Haut, die das Zusammenbacken weitestgehend verhindert. Während des Herabfallens durch das Fallrohrs 16 nimmt die Dicke des erstarrten Randbereichs weiter zu.

Die Schmelzetropfen tauchen in das cryogene Mediumbad 22 ein. Wenige Zehntel Sekunden nach dem Eintauchen in das cryogene Mediumbad 22 härten die Schmelzetropfen 2 vollständig durch und bilden ein Granulat 2. Aufgrund der tiefen Temperatur des cryogenen Mediumbades 22, von z.B. -200°C, können auch sehr heiße Prozessmedien 2, die z.B. mit einer Temperatur von bis zu 330°C dem Tropfenerzeugungsgenerator zugeführt werden, innerhalb weniger Zehntel Sekunden abgekühlt bzw. deren Tropfen vollständig durchgehärtet werden.

Im inneren der Vorrichtung 1 herrscht aufgrund des verdampfenden Stickstoffs immer ein leichter Überdruck. Auf diese Weise wird das Eindringen von Feuchtigkeit und/oder Sauerstoff vermieden. Der Überdruck kann über den Filter 27 begrenzt werden, da der verdampfte Stickstoff entweichen kann.

Beim erfindungsgemäßen Verfahren erfolgt der gesamte Übergang vom flüssigen in den festen Zustand innerhalb weniger Zehntel Sekunden in einem sehr einfachen Anlagenaufbau.

In diesem Zustand können die Teilchen 2 bzw. das Granulat 2 nicht mehr aneinander anhaften bzw. ein Anhaften wird durch die Fördereinrichtung 24 verhindert. Das Granulat 2 wird sofort über die Austragsschnecke 24 und das geöffnete Austragsventil 26 inert in Transportbehälter befördert.

Während des gesamten Prozesses kommen die Teilchen weder mit Sauerstoff noch mit Feuchtigkeit in Berührung, d.h. der gesamte Vorgang läuft inert ab.

Durch die Verwendung verschieden großer Düseneinsätze kann die Tropfengröße 2 bzw. die Größe des erzeugten Granulats auf einfache Weise variiert werden.

Die erfindungsgemäße Vorrichtung bzw. das erfindungsgemäße Verfahren zeichnet sich dadurch aus, dass auch Schmelzen mit hohen Temperaturen, beispielsweise bis zu 330°C, verprillt werden können. Bei der erfindungsgemäßen Vorrichtung zum Prillen einer Schmelze werden die Tropfen zunächst durch das gasförmige und dann durch das flüssige cryogene Medium gekühlt. Dieser zweistufige Kühlvorgang erzeugt zunächst eine starre, formgebende Oberfläche der etwa kugelförmigen Tropfen. Beim Eintauchen in das flüssige cryogene Medium werden aufgrund der hohen Wärmekapazität der Flüssigkeit die Schmelzetropfen schnell vollständig in ihrer Kugelform erstarrt und bilden ein Granulat. Da beim Eintauchen in die cryogene Flüssigkeit den Tropfen in kürzester Zeit viel Energie entzogen wird, kann mit dieser Vorrichtung auch ein Prozessmedium verprillt werden, das mit deutlich höheren Temperaturen als es aus dem Stand der Technik bekannt ist, dem Tropfenerzeugungsgenerator zugeführt wird. Deshalb ist es möglich mit dieser kompakten Vorrichtung Prozessmedien mit einer Schmelztemperatur von zumindest 150°C oder zumindest 200°C bzw. 250°C zu verprillen. Gegenüber der aus der aus dem Stand der Technik bekannten Wirbelschichtkühlung hat die cryogene Flüssigkeit im cryogenen Mediumbad eine viel höhere Wärmekapazität und kann so wesentlich effizienter bei viel geringerem Platzbedarf kühlen. Durch die erfindungsgemäße Vorrichtung ist es somit möglich sehr heiße Schmelzen in einer kompakten Anlage schnell, effektiv und innerhalb eines engen Partikelgrößenspektrums zu verprillen.

Für eine Vorrichtung, die in einem derartigen Temperaturbereich arbeitet müssen spezielle Dichtungen, insbesondere im Bereich des Schmelzebehälters bis zum Tropfenerzeugungsgenerator, vorgesehen werden, die für diesen Arbeitsbereich ausgelegt sind.

Mit diesem Verfahren können insbesondere Metallsalze verprillt werden. Solche sind auch anorganische Salze, wie z.B. wasserfreies Zink- und Zinnchlorid mit Schmelzpunkten von ca. 318°C bzw. von ca. 246°C sowie wasserhaltige Verbindungen, wie z.B. Zinn-(II)-chlorid-2-Wasser mit einem Schmelzpunkt von ca. 38°C bis 40,5°C.

Die erfindungsgemäße Vorrichtung kann wie folgt kurz zusammengefasst werden.

Die erfindungsgemäße Vorrichtung ist eine Vorrichtung zum Prillen von geschmolzenem Material. Die Vorrichtung weist einen Schmelzebehälter zum Schmelzen des Materials, einen Tropfenerzeugungsgenerator zum Ausbilden von Schmelzetropfen aus der Schmelze, ein Fallrohr und eine Kühleinrichtung auf. Der Tropfenerzeugungsgenerator ist am oberen Ende des Fallrohres angeordnet. Am unteren Ende des Fallrohrs ist ein mit einer cryogenen Flüssigkeit gefülltes Bad derart angeordnet, dass die vom Tropfenerzeugungsgenerator herabfallenden Schmelzetropfen in das Bad fallen. Eine Fördereinrichtung führt das Granulat aus dem Bad ab.

### Bezugszeichenliste

- 1: Vorrichtung
- 2: Schmelze
- 3: Schmelzebehälter
- 4: Heizvorrichtung
- 5: Rührwerk
- 6: Medienzuführung
- 7: inertes Medium
- 8: Steuervorrichtung
- 9: Ventil
- 10: Transferleitung
- 11: Tropfenerzeugungsgenerator
- 12: Federplatte
- 13: Schwingungseinheit
- 14: Lochplatte
- 15: Öffnungen, Düsen
- 16: Fallrohr
- 17: oberes Ende
- 18: Verteiler
- 19: cryogenes Medium
- 20: Düsen
- 21: Verbindungselement
- 22: cryogenes Mediumbad
- 23: cryogenes Medium
- 24: Austragsschnecke
- 25: Elektromotor
- 26: Austragsventil
- 27: Filter

## Patentansprüche

1. Vorrichtung zum Prillen von geschmolzenem Material, mit einem Schmelzebehälter (3) zum Schmelzen des Materials, einem Tropfenerzeugungsgenerator (11) zum Ausbilden von Tropfen aus dem geschmolzenen Material, einem Fallrohr (16) und einer Kühleinrichtung, wobei der Tropfenerzeugungsgenerator (11) am oberen Ende (17) des Fallrohres (16) angeordnet ist,
**dadurch gekennzeichnet,**
**dass** am unteren Ende des Fallrohrs (16) ein mit einer cryogenen Flüssigkeit (23) gefülltes Mediumbad (23) derart angeordnet ist, dass die vom Tropfenerzeugungsgenerator herabfallenden (11) Tropfen in das Mediumbad (22) fallen und dass eine Fördereinrichtung zum Abführen der erstarrten Tropfen aus dem Mediumbad (22) vorgesehen ist.

2. Vorrichtung gemäß Anspruch 1,
**dadurch gekennzeichnet,**
**dass** die Fördereinrichtung eine Austragsschnecke (24) ist.

3. Vorrichtung gemäß Anspruch 2,
**dadurch gekennzeichnet,**
**dass** das cryogene Mediumbad (22) eine rinnenförmig ausgebildete Bodenwandung aufweist.

4. Vorrichtung nach Anspruch 2 oder 3,
**dadurch gekennzeichnet,**
**dass** die Austragsschnecke (24) in der rinnenförmig ausgebildeten Bodenwandung angeordnet ist.

5. Vorrichtung gemäß einem der Ansprüche 1 bis 4,
**dadurch gekennzeichnet,**
**dass** das cryogene Mediumbad (22) gegenüber der Umgebung thermisch isoliert ist.

6. Vorrichtung gemäß einem der Ansprüche 1 bis 5,
**dadurch gekennzeichnet,**
**dass** der Tropfenerzeugungsgenerator (11) eine Federplatte (12), eine Schwingungseinheit (13) und eine Lochplatte (14) aufweist.

7. Vorrichtung gemäß einem der Ansprüche 1 bis 6,
**dadurch gekennzeichnet,**
**dass** am oberen Ende des Fallrohrs (16) ein Verteiler (18) zum Zuführen eines cryogenen Mediums (19) ausgebildet ist.

8. Vorrichtung gemäß einem der Ansprüche 1 bis 7,
**dadurch gekennzeichnet,**
**dass** das untere Ende des Fallrohrs (16) mit dem cryogenen Mediumbad (22) über ein teleskopartig und/oder elastisch ausgebildetes Verbindungsmittel (21) verbunden ist.

9. Vorrichtung gemäß einem der Ansprüche 1 bis 8,
**dadurch gekennzeichnet,**
**dass** die erstarrten Tropfen durch ein Austragsventil (26) abgeführt werden.

10. Vorrichtung Material gemäß einem der Ansprüche 1 bis 9,
**dadurch gekennzeichnet,**
**dass** am Mediumbad (22) und/oder am Fallrohr (16) ein Filter (27) zum Entweichen von verdampftem cryogenen Medium (19, 23) vorgesehen ist.

11. Verfahren zum Prillen von geschmolzenem Material, wobei eine Schmelze, von einem Tropfenerzeugungsgenerator (11) in Tropfen annähernd gleicher Größe und gleichen Gewichts zerteilt und ausgegeben wird und die Tropfen in einem Fallrohr (16) mittels eines gasförmigen cryogenen Mediums derart abgekühlt werden, dass sich im Randbereich der Tropfen eine stabile Haut bildet,
**dadurch gekennzeichnet,**
**dass** die Tropfen in einem flüssigen cryogenen Medium (23) eintauchen und **dadurch** vollständig durchhärten und über eine Fördereinrichtung (24) aus dem cryogenen Medium (23) abgeführt werden.

12. Verfahren gemäß Anspruch 11,
**dadurch gekennzeichnet,**
**dass** die Temperatur des geschmolzenen Materials am Tropfenerzeugungsgenerator (11) größer oder zumindest gleich dem Schmelzpunkt des zu verprillenden Materials ist.

13. Verfahren gemäß Anspruch 11 oder 12,
**dadurch gekennzeichnet,**
**dass** der gesamte Prozess inert abläuft.

14. Verfahren nach einem der Ansprüche 11 bis 13,
**dadurch gekennzeichnet,**
**dass** Material mit einem Schmelzpunkt von mindestens 150°C und vorzugsweise mindestens 200°C verprillt wird.

15. Verfahren nach einem der Ansprüche 11 bis 14,
**dadurch gekennzeichnet,**
**dass** ein Metallsalz verprillt wird.

16. Verfahren nach einem der Ansprüche 11 bis 15,
**dadurch gekennzeichnet,**
**dass** als cryogenes Medium flüssiger Stickstoff verwendet wird.

17. Verfahren nach einem der Ansprüche 11 bis 16,
**dadurch gekennzeichnet,**
**dass** als cryogenes Medium flüssiges Kohlendioxid verwendet wird.

18. Verfahren nach einem der Ansprüche 11 bis 17,
**dadurch gekennzeichnet,**
**dass** wasserfreies Zink- oder Zinnchlorid verprillt wird.
